# EUROPEAN PATENT SPECIFICATION

(11) **EP 2 900 470 B1**
(45) Date of publication and mention of the grant of the patent: **23.03.2016**
(21) Application number: 13774348.0
(22) Date of filing: 27.09.2013
(51) Int. Cl.: B32B 15/08, B32B 15/20, B32B 27/28

(54) **ALUMINUM-POLY(ARYL ETHER KETONE) LAMINATE, METHODS OF MANUFACTURE THEREOF, AND ARTICLES COMPRISING THE SAME**
ALUMINIUM-POLY(ARYLETHERKETON)LAMINAT, HERSTELLUNGSVERFAHREN DAFÜR UND ARTIKEL DAMIT
STRATIFIÉ D'ALUMINIUM-POLY(ARYL ÉTHER CÉTONE), SES PROCÉDÉS DE FABRICATION ET ARTICLES LE COMPRENANT

(30) Priority: 27.09.2012 US 201261706423 P
(43) Date of publication of application: 05.08.2015
(73) Proprietor: Rogers BVBA, 9000 Gent (BE)
(72) Inventor: RYNIERS, Filip Paul Karel, B-9080 Lochristi (BE)
(74) Representative: Harris, Oliver John Richard
(86) International application number: PCT/US2013/062260
(87) International publication number: WO 2014/052801

(56) References cited:
- DE-C1- 10 024 849

## Description

### BACKGROUND

This disclosure relates to an aluminum-poly(aryl ether ketone) laminate, methods of manufacture thereof, and articles comprising the same.

Metal-polymer laminates, in particular aluminum-polymer laminates, are useful for a variety of applications, for example power cables, heat insulation, food, beverage, or cigarette packaging, automobile or aircraft structural components, circuit boards, and others. However, it can be difficult to bond aluminum directly to polymers, and it is particularly difficult to provide an excellent bond between aluminum and poly(aryl ether ketone) polymers. Thus there remains a need in the art for aluminum-poly(aryl ether ketone) having excellent adhesion between the metal and polymer layers.

### SUMMARY

The above-described drawbacks and disadvantages are alleviated by a laminate including a tempered aluminum layer comprising aluminum in an amount of 95 to less than 99 wt%, and at least one of cobalt, copper, lithium, magnesium, manganese, nickel, platinum, and silicon in a total amount of at least 0.5 wt%; and a poly(aryl ether ketone) layer, wherein at least a portion layer and the poly(aryl ether ketone) layer are in direct contact.

Also disclosed is a laminate including a aluminum layer comprising a tempered aluminum containing aluminum in an amount of at least 98 weight percent, silicon and iron; and a poly(aryl ether ketone) layer, wherein the poly(aryl ether ketone) layer is disposed directly on the aluminum.

In another embodiment, a method of manufacturing a laminate is provided, the method including providing an aluminum layer comprising aluminum in an amount of 95 to less than 99 wt%, and at least one of cobalt, copper, lithium, magnesium, manganese, nickel, platinum, and silicon in a total amount of at least 0.5 wt%, and specifically aluminum in an amount of at least 98 weight percent, silicon and iron; disposing a poly(aryl ether ketone) layer directly on the aluminum; and heat-bonding the conductive and poly(aryl ether ketone) layers to manufacture the laminate.

The above discussed and other features and advantages of the present disclosure will be appreciated and understood by those skilled in the art from the following detailed description and drawings.

### BRIEF DESCRIPTION OF THE DRAWINGS

The foregoing and other aspects, features, and advantages of the disclosed embodiments are apparent from the following detailed description taken in conjunction with the accompanying drawings in which:
FIG. 1 is a schematic diagram of an embodiment of an aluminum-poly(aryl ether ketone) laminate.
FIG. 2 is a schematic diagram of another embodiment of an aluminum-poly(aryl ether ketone) laminate.
FIG. 3 is a graph showing bond strengths (pounds force per inch, lbf/in²) for hard tempered Aluminum 8079-poly(aryl ether ketone) laminates as received before soldering (Example 1), after soldering (Example 2), and for "soft" Aluminum 8079 foil-poly(aryl ether ketone) laminates before soldering (Comparative Example 3).

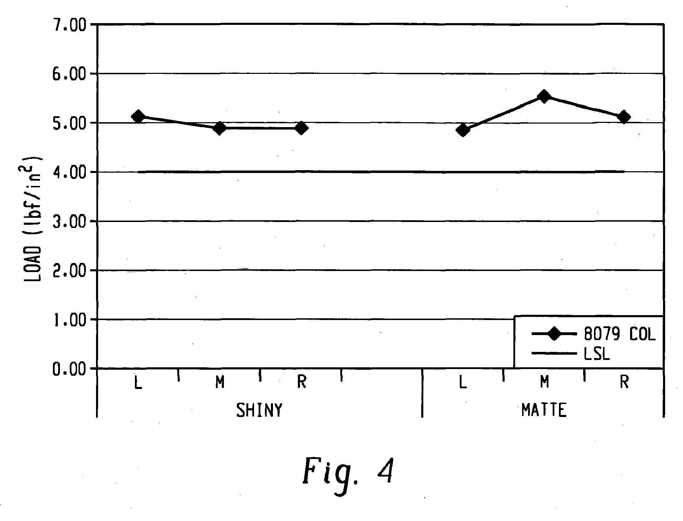

FIG. 4 is a graph showing bond strengths (pounds force per inch, lbf/in²) for hard tempered 8079 aluminum-poly(aryl ether ketone) laminates laminated on the "shiny" side (Example 4) and "matte" side (Example 5).

### DETAILED DESCRIPTION

The bond strength of an aluminum-poly(aryl ether ketone) adhesiveless laminate is unexpectedly improved if a tempered aluminum comprising silicon and iron is laminated directly to the poly(aryl ether ketone) ("PAEK"). While not wanting to be bound by theory, it is understood that the tempering causes the silicon and iron to form a surface that is better able to bond to the poly(aryl ether ketone). The surface can comprise nodules, which can become embedded in the poly(aryl ether ketone), thereby forming a stronger mechanical bond. The surface of the tempered aluminum can also have an improved affinity for the poly(aryl ether ketone), providing an improved chemical bond between the tempered aluminum and the poly(aryl ether ketone). The resulting aluminum-poly(aryl ether ketone) laminate has an excellent bond between the tempered aluminum and the poly(aryl ether ketone) even in the absence of an additional adhesive layer between the tempered aluminum and the polymer.

In a preferred embodiment, the laminate comprises a tempered aluminum layer comprising aluminum in an amount of at least 98 weight percent, silicon and iron; and a poly(aryl ether ketone) layer disposed directly on the aluminum, that is, with no additional adhesive layer between the tempered aluminum layer and the poly(aryl ether ketone) layer.

The preferred aluminum layer comprises aluminum, iron, and silicon. The aluminum layer comprises at least 98 weight percent (wt%), specifically 98 to 99.49 wt%, specifically 98.1 to 99.39 wt%, more specifically 98.40 to 99.25 wt% of aluminum. The aluminum layer further comprises iron, specifically 0.50 to 1.5 wt% of iron, specifically 0.60 to 1.4 wt% of iron, more specifically 0.7 to 1.3 wt% of iron. The aluminum layer further comprises silicon, specifically 0.01 to 0.50 wt% silicon, specifically 0.02 to 0.40 wt% of silicon, more specifically 0.05 to 0.30 wt% of silicon. For example, the aluminum layer comprises 98.0 to 99.49 wt% of aluminum, 0.50 to 1.5 wt% of iron, and 0.01 to 0.50 wt% of silicon. Alternatively, the aluminum layer comprises 98.1 to 99.39 wt% of aluminum, 0.60 to 1.5 wt% of iron, and 0.02 to 0.40 wt% of silicon. In a preferred embodiment, the aluminum layer comprises 98.40 to 99.25 wt% of aluminum, 0.70 to 1.3 wt% of iron, and 0.05 to 0.30 wt% of silicon.

It is to be understood that other elements can be present in this aluminum layer in addition to silicon and iron, in a total amount of less than or equal to 0.25 wt%, specifically less than 0.2 wt%, or less than 0.15 wt%. The other elements can be other metals. In an embodiment, the aluminum layer comprises less than or equal to 0.05 wt% of copper (Cu), less than or equal to 0.0003 wt% of magnesium (Mg), less than or equal to 0.1% of zinc (Zn), less than or equal to 0.05 wt% of titanium (Ti), or a combination of the foregoing. In addition, any other element can present in an amount of less than 0.05 wt%. In particular, the aluminum layer comprises less than or equal to 0.05 wt% of copper (Cu), less than or equal to 0.0003 wt% of magnesium (Mg), less than or equal to 0.1 % of zinc (Zn), less than or equal to 0.05 wt% of titanium (Ti), and any other element can present in an amount of less than 0.05 wt%.

The aluminum layer comprising aluminum in an amount of at least 98 weight percent, silicon, and iron is tempered, specifically hard tempered, and in an embodiment is not annealed. The aluminum can be strain-hardened, thermally treated, or a combination thereof. The aluminum can be strain-hardened according to an "H" designation. Particularly, the aluminum can be strain hardened according to the H1, H2, H3, or H4 designation. In an embodiment, the aluminum is strain hardened according to the H1 designation (without annealing), more specifically the H18 designation (a temper having a final degree of strain-hardening equivalent to that resulting from approximately 75% reduction in area). Hard tempered Aluminum 8079 (i.e., AA8079 or EN-AW 8079) having the H18 designation is preferred. The descriptive nomenclature for aluminum treatment is further described in ANSI H35.1-2004, the content of which in its entirety is incorporated herein by reference.

In another embodiment, the laminate comprises a tempered aluminum layer comprising aluminum in an amount of at least 98 weight percent, nickel, or iron, or a combination thereof; and a poly(aryl ether ketone) disposed directly on the aluminum, that is, with no additional adhesive layer between the tempered aluminum layer and the poly(aryl ether ketone) layer.

The aluminum layer comprising aluminum in an amount of at least 98 weight percent, iron, or nickel, or a combination thereof can comprise 0.01 to 2 wt% iron, specifically 0.05 to 1.3 wt% iron, more specifically 0.1 to 0.8 wt% iron. The aluminum layer can comprise 0.001 to 0.1 wt% nickel, specifically 0.005 to 0.05 wt% nickel, more specifically 0.01 to 0.03 wt% nickel, with the reminder being aluminum and less than 0.5 wt% total of other elements. For example, the aluminum layer comprises 0.01 to 1 weight percent iron, and 0.001 to 0.05 weight percent nickel, with the remainder being aluminum and less than 0.3 wt% total of other elements. Alternatively, the aluminum layer can comprise 0.07 to 2 weight percent or to 1.3 weight percent iron, and 0.001 to 0.05 weight percent nickel with the remainder being aluminum and less than 0.3 wt% total of other elements. This aluminum can be strain-hardened, thermally treated, or a combination thereof. The aluminum can be strain-hardened according to an "H" designation, for example according to the H1, H2, H3, or H4 designation. In an embodiment, the aluminum is strain hardened according to the H1 designation (without annealing), more specifically the H14 to H18, preferably the H18 designation. Alternatively, the aluminum comprising silicon and iron can be heat treated according to a "T" designation, such as T1, T2, T3, T4, T5, T6, T7, T8, T9, or T10. For example, H18 tempered Aluminum 1200 (i.e., AA1200) can be used.

It may be possible to use a variety of other tempered aluminum alloys. Such aluminum alloys comprise aluminum in an amount of 95 to less than 99 wt%, together with at least one of cobalt, copper, lithium, magnesium, manganese, nickel, platinum, and silicon in a total amount of at least 0.5 wt%. Exemplary alloys include AA-8000; Alnico; Duralumin; Hiduminium; Kryon; Magnalium; Magnox; Nambe; Pandalloy; Silumin; Titanal; and Y alloy. In an embodiment the alloys are strain-hardened according to the H1, H2, H3, or H4 designation, and in particular the H1 designation (without annealing), more specifically the H18 designation. Alternatively, the alloys can be heat treated according to a "T" designation, such as T1, T2, T3, T4, T5, T6, T7, T8, T9, or T10. Other treatments can be used, for example partial annealing, cold working, stress relieving, natural aging, artificial aging, over-aging, quenching, stretching, or a combination thereof and the like. An embodiment in which the aluminum is work hardened by strain-hardening or cold working is specifically mentioned. In an embodiment, the aluminum is cold worked (e.g., shaped) at a temperature below its recrystallization temperature, e.g., at 10 to 100°C, specifically at 15 to 80°C, more specifically at 20 to 60°C. The aluminum can be cold worked by squeezing, bending, drawing, shearing, or a combination thereof.

In any of the foregoing embodiments, aluminum layer can be prepared by methods known in the art, for example double rolling.

In any of the foregoing embodiments, the aluminum layer can have any suitable dimension, and can have a thickness of 5 to 1000 micrometers ("µm"), specifically 10 to 500 µm, more specifically 20 to 100 µm.

In any of the foregoing embodiments the surface morphology of the aluminum layer is not specifically limited, and can shiny or matte, smooth or rough, and can be regularly modulated or randomly modulated (i.e., embossed). A surface layer can have a surface roughness parameter Rₐ of 0.01 to 3 µm, specifically 0.05 to 0.1 µm, more specifically 0.1 to 0.5 µm. In an embodiment, the surface layer is as-fabricated, and has a surface roughness parameter Rₐ of 0.5 µm.

Further in any of the foregoing embodiments, surface treatments can be used to prepare the aluminum layer, for example chemical cleaning to remove lubricant or foreign material from the surface, or chemical or electrochemical etching to roughen the surface, or mechanical roughening, or abrading.

The aluminum layer is laminated to a poly(aryl ether ketone) ("PAEK") layer. As used herein, PAEK contains units of the formula -(-Ar-X-)- and the formula -(-Ar'-Y-)-, wherein Ar and Ar' are each independently a substituted or unsubstituted divalent aromatic group, for example substituted or unsubstituted phenylene, substituted or unsubstituted naphthylene, substituted or unsubstituted pentalenylene, substituted or unsubstituted indenylene, substituted or unsubstituted azulenylene, substituted or unsubstituted heptalenylene, substituted or unsubstituted indacenylene, substituted or unsubstituted fluorenylene, substituted or unsubstituted phenalenylene, substituted or unsubstituted phenanthrylene, substituted or unsubstituted anthrylene, substituted or unsubstituted fluoranthenylene, substituted or unsubstituted pyrenylene, substituted or unsubstituted chrysenylene, substituted or unsubstituted picenylene, substituted or unsubstituted perylenylene, and the like. Exemplary substituents include C₁₋₄ alkyl and C₁₋₄ alkoxy groups, halides, and combinations comprising at least one of the foregoing groups. Specific examples of Ar and Ar' include 1,4-phenylene, 4,4'-biphenylene, or 1,4-, 1,5-, or 2,6-naphthylene. Further, X is an electron-withdrawing group, specifically a carbonyl group (-C(O)-), a carboxyl group (-CO₂-), a phosphoryl group (-PO₃-)or a sulfonyl group (-SO₂-); Y is a divalent atom or group such as -O-, -S-, -CH₂-, isopropylidene, or the like, wherein at least 50%, specifically, at least 70%, or more specifically, at least 80%, of the groups X is a carbonyl group, and at least 50%, specifically at least 70%, or more specifically at least 80%, of the groups Y is -O-.

In a particularly useful embodiment, 100% of the groups X are carbonyl groups and 100% of the groups Y are oxygen. In this embodiment, the PAEK can be a polyether ether ketone ("PEEK"; formula I), a polyether ketone ("PEK"; formula II), a polyether ketone ketone ("PEKK"; formula III), or a polyether ether ketone ketone ("PEEKK"; formula IV), but other arrangements of the carbonyl groups and oxygen groups are also possible. In formulas I to IV, n can be 100 to 1,000,000, specifically 1000 to 900,000.

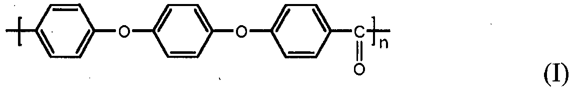

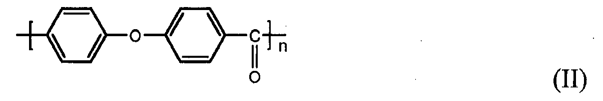

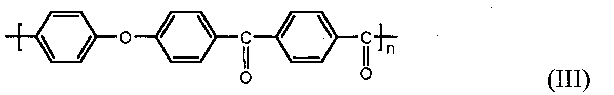

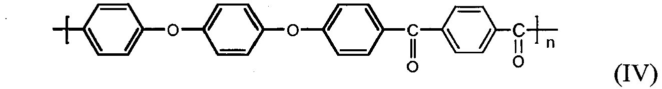

Exemplary commercially available PAEK materials include PEEK from Victrex (melting point 343°C) and PEKK available under the trade name OXPEKK from Oxford Performance Materials Inc. (melting point, depending on the grade, from 307°C to 360°C).

In addition, the poly(aryl ether ketone) layer can comprise one or more particulate fillers, in particular dielectric particulate fillers. Useful particulate fillers include, but are not limited to, titanium dioxide (rutile and anatase), barium titanate (Ba₂Ti₉O₂₀), strontium titanate, silica particles and hollow spheres (including fused amorphous silica and fumed silica), other hollow ceramic spheres, glass spheres, corundum, wollastonite, aramide fibers (for example, KEVLAR from DuPont), fiberglass, quartz, boron nitride, aluminum nitride, silicon carbide, beryllia, alumina, magnesium silicate hydroxide, (Mg₃Si₄O₁₀(OH)₂, also known as talc), and magnesia. The particulate fillers can be used alone or in combination. To improve adhesion between the fillers and polymer, the filler can be treated with one or more coupling agents, such as silanes, zirconates, or titanates.

The total amount of the dielectric particulate filler, when present, can be 1 to 80 wt%, or 5 to 60 wt%, of the total weight of the poly(aryl ether ketone) layer, specifically 10 to 50 wt%, and more specifically, 15 to 40 wt%, or 15 to 30 wt%, based on the total weight of the poly(aryl ether ketone) layer.

A filler in a rigid or flexible dielectric poly(aryl ether ketone), for example, polyether ether ketone, can be talc. It has been found that talc-filled polyether ether ketone poly(aryl ether ketone) layers can be electrically and thermo-mechanically equivalent to unfilled polyether ether ketone film, but with improved coefficient of thermal expansion (CTE), as well as lower cost. In an embodiment, a talc-filled polyether ether ketone film has a CTE (measured from 30 to 150°C) of less than 30 parts per million per degree Celsius ("ppm/°C"), specifically less than 25 ppm/°C. In another embodiment, an extruded 40 wt% talc-filled film has a CTE of 16.5 ppm/°C in the machine direction, and a CTE of 22.5 ppm/° C in the cross-machine direction.

Suitable talcs are of small particle size, for example having an average largest dimension of less than 10 micrometers, specifically less than 5 micrometers. An advantage of using talc is that it is inherently flame resistant and non-halogenated, and does not significantly adversely affect the electrical properties of the poly(aryl ether ketone) resin system. Poly(aryl ether ketone)s with low amounts of talc also have low water absorption, and thus can be suitable for uses in high humidity conditions. In another embodiment, the talc is present in an amount of 5 to 60 wt%, specifically 10 to 55 wt%, more specifically 20 to 50 wt% of the total weight of the substrate composition. A 20 wt% and a 40 wt% talc-filled poly(ether ether ketone) is commercially available from, for example, Victrex PLC under the trade name VICTREX® PEEK™ 450TL40.

In still another embodiment, fillers in rigid poly(aryl ether ketone) layer materials include rutile titanium dioxide and amorphous silica. Because of the sharp difference in their dielectric constants, materials with a broad range of dielectric constants combined with a low dissipation factor can be prepared by adjusting the respective amounts of the two fillers in the composition.

When used as a rigid poly(aryl ether ketone) layer, the poly(aryl ether ketone) can further comprise a fibrous web as reinforcement, a woven or non-woven assemblage of fibers capable of withstanding the processing conditions involved in the formation of the dielectric material, circuit board materials, and circuits formed therefrom. The fibrous web comprises thermally stable webs of a suitable fiber, specifically glass, for example, E, S, and D glass, or high temperature polymer fibers, for example, KODEL polyester from Eastman Kodak or polyphenylene sulfide fiber from Phillips Petroleum, liquid crystalline polymers such as VECTRAN from Kuraray and polyaramid fibers. Such thermally stable fiber reinforcement provides the poly(aryl ether ketone) layer composite with the desired structural rigidity. In addition, the use of the fibrous web renders a dielectric material with a relatively high mechanical strength. Specific examples of fibrous webs are commercially available from, for example, Fiber Glast under the style designation "519-A" (0.0015 inches (38 micrometers) thick); Hexcel-Schwebel under the style designations "112" (0.0032 inches (81 micrometers) thick), "1674" (0.0045 inches (114 micrometers) thick), and "1080" (0.0025 inches (63.5 micrometers) thick); BGF under style designation "106" (0.0015 inches (38 micrometers) thick); and BGF under the style designation "7628" (0.0069 inches (175 micrometers) thick).

When present, the fibrous web generally comprises 10 wt% to 50 wt% of the total weight of the poly(aryl ether ketone) layer, specifically 15 wt% to 40 wt%, or, more specifically, 20 to 30 wt%, based on the total weight of the poly(aryl ether ketone) layer. When a fibrous web is present, the thickness of the poly(aryl ether ketone) layer can be 1 to 400 mils (0.025 to 10 millimeters), specifically 4 to 197 mils (0.1 to 5 millimeters), specifically 4 to 80 mils (0.1 to 2.03 millimeters).

The poly(aryl ether ketone) can further optionally comprise other additives known in the art, for example, antioxidants, and ultraviolet light absorbers. Since one of the significant advantages of using PAEK, in particular PEEK, is its flame retardancy, in an embodiment, the compositions do not contain any added flame retardant. In another embodiment, the compositions do not contain any brominated or chlorinated flame retardant. It is nonetheless possible in still other embodiments to include non-halogenated and/or halogenated flame retardants (e.g., ethylene bistetrabromophthalimide, tetradecabromodiphenoxy benzene), and/or decabromodiphenoxyl oxide.

The poly(aryl ether ketone) layer materials can be processed by methods known in the art. For example, all components (polymeric component(s) and optional additives) are thoroughly mixed in conventional mixing equipment in the melt. Mixing continues until resins and additives are uniformly dispersed throughout the composition. The mixture can be extruded to form a film. In an exemplary process, a rigid poly(aryl ether ketone) layer comprising a fibrous web is prepared by placing the web between two poly(aryl ether ketone) resin films and pressed at a temperature and pressure and for a time effective to completely infiltrate the fibrous web with the resin. Suitable conditions for such infiltration can be readily determined by one of ordinary skill in the art without undue experimentation using the guidance provided herein, and will depend on factors such as the softening or melt temperature of the resin and the thickness of the fibrous web. Exemplary conditions are 100 to 400°C, specifically 160 to 250°C, and 100 to 1200 pounds per square inch (psi) (0.689 to 8.27 megaPascals (MPa)) for up to three hours.

The laminate can be manufactured by a method which comprises providing the tempered aluminum layer; disposing a poly(aryl ether ketone) layer directly on the aluminum layer; and heat-bonding the tempered aluminum layer and poly(aryl ether ketone) layers for a time and at a temperature and a pressure effective to manufacture the laminate.. Suitable conditions for lamination will depend on factors such as the softening or melt temperature of the dielectric and the thickness of the fibrous web if present. Examples of such conditions include 200 to 400°C, more specifically 300 to 400°C while compressing under a pressure 1 to 10 MPa, for 0.1 to 10 hours, specifically 0.2 to 5 hours, to manufacture the laminate. The pressure can be provided by plates or rollers. Calendaring at the foregoing temperature is specifically mentioned. The heat-bonding can comprise providing the tempered aluminum and the polyaryl ketone to pre-heated plates or rollers, or disposing the tempered aluminum and the polyaryl ketone on the plates or rollers and then heating, and can comprise pre-heating the tempered aluminum, the polyaryl ketone, or a combination thereof.

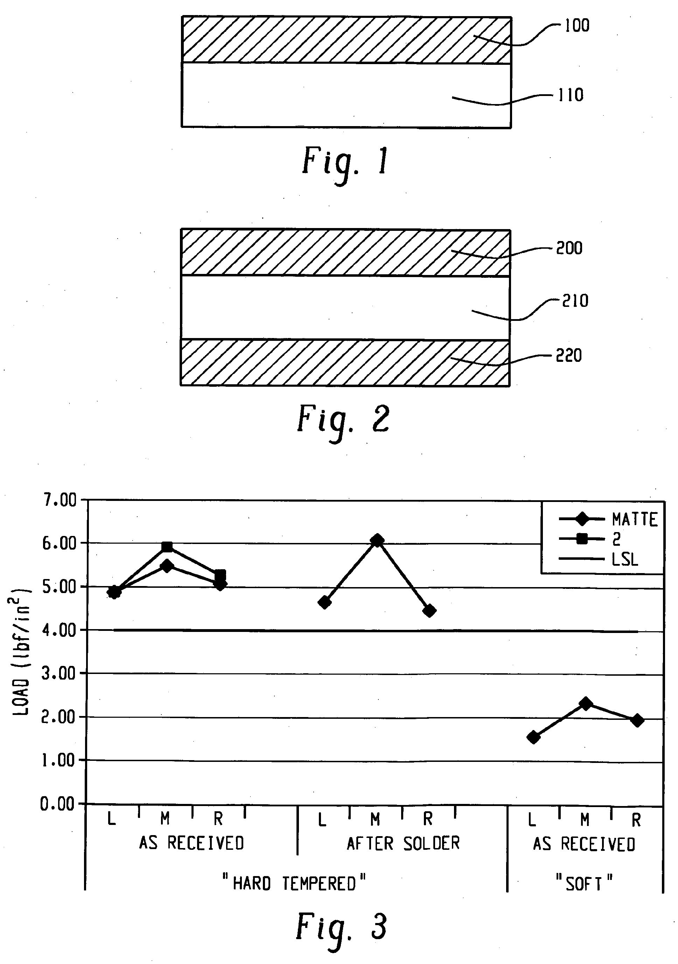

The laminate can be in the form of a single laminate, or a laminate comprising a plurality of layers, such as a double laminate. FIG. 1 shows a single laminate comprising an aluminum layer 100 and a poly(aryl ether ketone) layer 110. No adhesive is disposed between aluminum layer 100 and poly(aryl ether ketone) layer 110. FIG. 2 shows an alternative embodiment comprising a first aluminum layer 200, a poly(aryl ether ketone) layer 210, and an additional (second) aluminum layer 220, where no adhesive is disposed between aluminum layer 200 and poly(aryl ether ketone) layer 210 or between poly(aryl ether ketone) layer 210 and additional aluminum layer 220. Other layers and other configuration are possible. For example, one or more of the aluminum layers can be patterned.

The laminate is useful in a wide variety of applications, for example EMF-RFI shielding, power cables, heat insulation, food, beverage, or cigarette packaging, automobile or aircraft structural components, circuit boards, or lightning strike protection.

The laminate provides improved properties, including improved bond strength between layers, and thus durability and electrical properties suitable for a variety of applications, at reduced cost. The laminates can have a bond strength of at least 3 pound force per square inch ("lbf/in²"), for example 3 to 10 lbf/in², 4 to 8 lbf/in², or 4 to 7 lbf/in².

The laminate provides dielectric properties, that is, a dielectric constant of less than 4, specifically less than 3.8, more specifically less than 3.6; and a dissipation factor of less than 0.015, specifically less than 0.010, more specifically less than 0.008, each measured over 1 to 10 gigahertz ("GHz").

In addition, laminates are rated V-0 when measured according to UL-94, with a burn time of 1 second. In a specific embodiment, circuit laminates are rated V-0 when measured according to UL-94, with a burn time of 1 second even without presence of a bromine or chlorine containing flame retardant additive. This is a significant advantage over current low poly(aryl ether ketone) layers, which are often not flame retardant, and therefore are used with bromine-containing additives to achieve a UL 94 rating of V-0. Due to new legislation in, for example, Europe and Japan, there is a great interest in removing bromine and chlorine in the manufacture of circuit assemblies. Unfortunately, substitution of the bromine-containing compounds with other flame retardant additives often requires the addition of large amounts of additive, which can be detrimental to the electrical properties of laminates made with the polymeric materials.

In another embodiment, the Z-axis coefficient of thermal expansion is less than 60 ppm, more specifically less than 40 ppm.

Because the laminate is adhesiveless, failure modes associated with adhesives, such as delamination, and costs associated with use of the adhesive, are effectively eliminated.

In summary, in a preferred embodiment, laminate comprises a tempered aluminum layer comprising aluminum in an amount of 95 to less than 99 wt%, and at least one of cobalt, copper, lithium, magnesium, manganese, nickel, platinum, and silicon in a total amount of at least 0.5 wt%, preferably wherein the tempered aluminum layer comprises aluminum in an amount of at least 98 wt%, and silicon and iron in a total amount of at least 0.5 wt%., with a temper of H1, even more preferably wherein the aluminum comprises 98.40 to 99.25 wt% of aluminum, 0.70 to 1.3 wt% of iron, and 0.05 to 0.30 wt% of silicon, with a temper of H14 to H18, and most preferably wherein the aluminum is tempered Aluminum 8079 with the temper designation H18; and a poly(aryl ether ketone) layer, specifically a poly(ether ether ketone) layer comprising, for example, talc and/or glass fiber reinforcement, and wherein at least a portion layer and the poly(aryl ether ketone) layer are in direct contact. A method of manufacturing the foregoing laminates comprises directly contacting a least portion of the foregoing tempered aluminum layers with at least a portion of the foregoing poly(aryl ether ketone) layer; and heat-bonding the aluminum layer and the poly(aryl ether ketone) layer under conditions effective to manufacture the laminate. Articles comprising the foregoing laminates include lightning strike protection articles.

The invention is further illustrated by the following non-limiting examples.

### EXAMPLES

### Example 1.

Tempered aluminum (Aluminum 8079 coil, H18 temper) and PEEK (Victrex) was used as received. Two different samples of the tempered aluminum was laminated to the poly(ether ether ketone) in a roll-to-roll apparatus to provide an aluminum-poly(ether ether ketone) adhesiveless laminate.

### Example 2.

Example 1 was repeated except that the tempered aluminum (Aluminum 8079 coil) was first treated under simulated solder conditions.

### Comparative Example 3.

Example 1 was repeated except that soft aluminum (Aluminum 8079) was used instead of the tempered aluminum. The soft aluminum was used as received.

The bond strength of the laminates of Examples 1 and 2 and Comparative Example A were evaluated by first heat shocking the laminates by quenching from 288°C in water, and then determining the bond strength between the aluminum and the poly(ether ether ketone). The samples were tested at three locations (left (1), middle (m), and right (r)). The results are shown in FIG. 1. The designation "2" refers to the second sample tested. The designation "LSL" refers the desired lower specification limit. As shown in FIG. 1, the laminates of Examples 1 and 2 provided bond strengths of 4.5 to 6 pound force per square inch ("lbf/in²"), which was surprisingly greater than the laminate of Comparative Example 3, which used the same aluminum composition but a different temper, and provided bond strengths of 1.5 to 2.5 lbf/in².

### Example 4.

Example 1 was repeated except that the poly(ether ether ketone) was bonded to only the shiny side of the aluminum foil.

### Example 5.

Example 1 was repeated except that the poly(ether ether ketone) was bonded to only the matte side of the aluminum foil.

The bond strength of the laminates of Examples 4 and 5 were evaluated by first heat shocking the laminates by quenching from 288°C in water, and then determining the bond strength between the aluminum and the poly(ether ether ketone). Adhesion was tested at three locations (left (1), middle (m), and right (r)). The results are shown in FIG. 5. The designation "LSL" refers the desired lower specification limit. As shown in FIG. 5, the laminates of Examples 4 provided bond strengths of 4.8 to 5.2 lbf/in², and the laminate of Example 5 provided bond strengths of 4.8 to 5.5 lbf/in². The similar bond strengths of the laminates of Examples 3 and 4 shows that when the disclosed tempered aluminum is used the bond strength is substantially insensitive to the surface roughness of the aluminum foil.

As used herein, when an element is referred to as being "on" another element, it can be directly on the other element or intervening elements can be present therebetween. In contrast, when an element is referred to as being "directly on" another element, there are no intervening elements present. Further, although the terms "first," "second," "third" etc. can be used herein to describe various elements, components, regions, layers and/or sections, these elements, components, regions, layers and/or sections should not be limited by these terms. These terms are only used to distinguish one element, component, region, layer or section from another element, component, region, layer or section. Thus, "a first element," "component," "region," "layer" or "section" discussed below could be termed a first element, component, region, layer or section without departing from the teachings herein.

As used herein, the singular forms "a," "an," and "the" are intended to include the plural forms, including "at least one," unless the content clearly indicates otherwise. "Or" means "and/or." The terms "comprises" and "comprising" or "includes" and/or "including," when used in this specification, specify the presence of stated features, regions, integers, steps, operations, elements, and/or components, but do not preclude the presence or addition of one or more other features, regions, integers, steps, operations, elements, components, and/or groups thereof. All ranges are inclusive of the endpoints. Amounts of elements in the aluminum are based on the total weight of the aluminum.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

As used herein, when a definition is not otherwise provided, the term "substituted" means a hydrogen atom (e.g., 1, 2, 3, or 4 hydrogen atoms) substituted with a specified group or groups, provided that the valence of the moiety being substituted is not exceeded.

"Alkyl" as used herein means a straight or branched chain saturated aliphatic hydrocarbon having the specified number of carbon atoms, specifically 1 to 12 carbon atoms, more specifically 1 to 6 carbon atoms. Alkyl groups include, for example, groups having from 1 to 50 carbon atoms (C₁-C₅₀ alkyl).

"Alkoxy" as used herein means an alkyl group that is linked via an oxygen (i.e., -O-alkyl). Non-limiting examples of C₁ to C₃₀ alkoxy groups include methoxy groups, ethoxy groups, propoxy groups, isobutyloxy groups, sec-butyloxy groups, pentyloxy groups, iso-amyloxy groups, and hexyloxy groups.

"Alkenyl" as used herein means a straight or branched chain, monovalent hydrocarbon group having at least one carbon-carbon double bond (e.g., ethenyl (-HC=CH₂)).

"Alkynyl" as used herein means a straight or branched chain, monovalent hydrocarbon group having at least one carbon-carbon triple bond (e.g., ethynyl).

Exemplary embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated can be rounded. Thus, the regions illustrated in the figures are schematic in nature and their shapes are not intended to illustrate the precise shape of a region and are not intended to limit the scope of the present claims.

While this disclosure describes exemplary embodiments, it will be understood by those skilled in the art that various changes can be made and equivalents can be substituted for elements thereof without departing from the scope of the disclosed embodiments. In addition, many modifications can be made to adapt a particular situation or material to the teachings of this disclosure without departing from the scope thereof Therefore, it is intended that this disclosure not be limited to the particular embodiments disclosed as the best mode contemplated for carrying out this disclosure. It should also be understood that the embodiments disclosed herein should be considered in a descriptive sense only and not for purposes of limitation.

## Claims

1. A laminate comprising:
a tempered aluminum layer comprising aluminum in an amount of 95 to less than 99 wt%, and at least one of cobalt, copper, lithium, magnesium, manganese, nickel, platinum, and silicon in a total amount of at least 0.5 wt%; and
a poly(aryl ether ketone) layer, wherein at least a portion of said tempered aluminium layer and the poly(aryl ether ketone) layer are in direct contact.

2. The laminate of claim 1, wherein:
(a). the tempered aluminum layer comprises aluminum in an amount of at least 98 wt%, and silicon and iron in a total amount of at least 0.5 wt%; and/or
(b). the aluminum is tempered to a designation of H1.

3. The laminate of any one of claims 1 to 2, wherein the aluminum is tempered to a designation of H18.

4. The laminate of any one of claims 1 to 2, wherein the aluminum comprises
98 to 99.49 wt% of aluminum,
0.50 to 1.5 wt% of iron, and
0.01 to 0.50 wt% of silicon.

5. The laminate of claim 4, wherein the aluminum comprises
98.1 to 99.39 wt% of aluminum,
0.60 to 1.5 wt% of iron, and
0.02 to 0.40 wt% of silicon.

6. The laminate of claim 5, wherein the aluminum comprises
98.40 to 99.25 wt% of aluminum,
0.70 to 1.3 wt% of iron, and
0.05 to 0.30 wt% of silicon.

7. The laminate of any one of claims 2 to 6, wherein the aluminum further comprises other elements in a total amount of less than or equal to 0.25 wt%.

8. The laminate of any one of claims 2 to 6, wherein the aluminum further comprises less than or equal to 0.05 wt% of copper, less than or equal to 0.0003 wt% of magnesium, and less than or equal to 0.05 wt% of titanium.

9. The laminate of claim 8, wherein the aluminum is tempered Aluminum 8079 with the tempering designation H18.

10. The laminate of any one of claims 1 to 9, wherein:
(a). the poly(aryl ether ketone) is poly(ether ether ketone); and/or
(b). the poly(aryl ether ketone) layer further comprises a particulate filler in an amount of 1 to 80 wt%, based on the total weight of the poly(aryl ether ketone) layer, preferably wherein the particulate filler is a talc.

11. The laminate of any one of claims 1 to 10, wherein the poly(aryl ether ketone) layer further comprises a glass fiber reinforcement.

12. A method of manufacturing a laminate, the method comprising:
directly contacting a least portion of a tempered aluminum layer comprising aluminum in an amount of 95 to less than 99 wt%, and at least one of cobalt, copper, lithium, magnesium, manganese, nickel, platinum, and silicon in a total amount of at least 0.5 wt%, with at least a portion of a poly(aryl ether ketone) layer; and
heat-bonding the aluminum layer and the poly(aryl ether ketone) layer under conditions effective to manufacture the laminate.

13. The method of claim 12, wherein the aluminum:
(a). comprises aluminum in an amount of at least 98 wt%, and silicon and iron in a total amount of at least 0.5 wt%; or
(b). comprises
98.40 to 99.25 wt% of aluminum,
0.70 to 1.3 wt% of iron, and
0.05 to 0.30 wt% of silicon, preferably wherein the aluminum is tempered Aluminum 8079, tempered to a designation of H18.

14. The method of any one of claims 12 to 13, wherein the heat bonding is at 200 to 450°C while compressing under a pressure of 2 to 10 megaPascals.

15. An article comprising the laminate of any one of claims 1 to 11.

## Patentansprüche

1. Laminat, das Folgendes umfasst:
eine gehärtete Aluminiumschicht umfassend Aluminium in einer Menge von 95 bis weniger als 99 Gew.-%, und zumindest eines von Kobalt, Kupfer, Lithium, Magnesium, Mangan, Nickel, Platin und Silizium in einer Gesamtmenge von zumindest 0,5 Gew.-%; und eine Poly(aryletherketon)-Schicht, wobei zumindest ein Teil der gehärteten Aluminiumschicht und der Poly(aryletherketon)-Schicht in direktem Kontakt stehen.

2. Laminat nach Anspruch 1, wobei:
(a). die gehärtete Aluminiumschicht Aluminium in einer Menge von zumindest 98 Gew.-%, und Silizium und Eisen in einer Gesamtmenge von zumindest 0,5 Gew.-% umfasst; und/oder (b) das Aluminium bis zu einem Härtegrad von H1 gehärtet ist.

3. Laminat nach einem der Ansprüche 1 bis 2, wobei das Aluminium bis zu einem Härtegrad von H18 gehärtet ist.

4. Laminat nach einem der Ansprüche 1 bis 2, wobei das Aluminium umfasst:
98 bis 99,49 Gew.-% Aluminium,
0,50 bis 1,5 Gew.-% Eisen, und
0,01 bis 0,50 Gew.-% Silizium.

5. Laminat nach Anspruch 4, wobei das Aluminium umfasst:
98,1 bis 99,39 Gew.-% Aluminium,
0,60 bis 1,5 Gew.-% Eisen, und
0,02 bis 0,40 Gew.-% Silizium.

6. Laminat nach Anspruch 5, wobei das Aluminium umfasst:
98,40 bis 99,25 Gew.-% Aluminium,
0,70 bis 1,3 Gew.-% Eisen, und
0,05 bis 0,30 Gew.-% Silizium.

7. Laminat nach einem der Ansprüche 2 bis 6, wobei das Aluminium des Weiteren andere Elemente in einer Gesamtmenge von weniger oder gleich 0,25 Gew.-% umfasst.

8. Laminat nach einem der Ansprüche 2 bis 6, wobei das Aluminium des Weiteren weniger als oder gleich 0,05 Gew.-% Kupfer, weniger als oder gleich 0,0003 Gew.-% Magnesium, und weniger als oder gleich 0,05 Gew.-% Titan umfasst.

9. Laminat nach Anspruch 8, wobei das Aluminium gehärtetes Aluminium 8079 mit dem Härtegrad von H18 ist.

10. Laminat nach einem der Ansprüche 1 bis 9, wobei:
(a). das Poly(aryletherketon) Poly(etheretherketon) ist; und/oder
(b). die Poly(aryletherketon)-Schicht des Weiteren einen partikulären Füllstoff in einer Menge von bis zu 80 Gew.-% auf der Grundlage des Gesamtgewichts der Poly(aryletherketon)-Schicht umfasst,
wobei der partikuläre Füllstoff vorzugsweise ein Talk ist.

11. Laminat nach einem der Ansprüche 1 bis 10, wobei die Poly(aryletherketon)-Schicht des Weiteren eine Glasfaserverstärkung umfasst.

12. Verfahren zur Herstellung eines Laminats, wobei das Verfahren umfasst:
direktes Inkontaktbringen zumindest eines Teils einer gehärteten Aluminiumschicht, die Aluminium in einer Menge von 95 bis weniger als 99 Gew.-% und zumindest eines von Kobalt, Kupfer, Lithium, Magnesium, Mangan, Nickel, Platin und Silizium in einer Gesamtmenge von zumindest 0,5 Gew.-% umfasst, mit zumindest einem Teil einer Poly(aryletherketon)-Schicht; und
Heißverkleben der Aluminiumschicht und der Poly(aryletherketon)-Schicht unter Bedingungen, die effektiv für die Herstellung des Laminats sind.

13. Verfahren nach Anspruch 12, wobei das Aluminium:
(a). Aluminium in einer Menge von zumindest 98 Gew.-%, und Silizium und Eisen in einer Gesamtmenge von zumindest 0,5 Gew.-% umfasst; oder
(b). umfasst:
98,40 bis 99,25 Gew.-% Aluminium,
0,70 bis 1,3 Gew.-% Eisen, und
0,05 bis 0,30 Gew.-% Silizium, wobei das Aluminium vorzugsweise gehärtetes Aluminium
8079 ist, das bis zu einem Härtegrad von H18 gehärtet ist.

14. Verfahren nach einem der Ansprüche 12 bis 13, wobei die Heißverklebung bei 200 bis 450°C unter Kompression mit einem Druck von 2 bis 10 Megapascal erfolgt.

15. Gegenstand umfassend das Laminat nach einem der Ansprüche 1 bis 11.

## Revendications

1. Stratifié comprenant :
une couche d'aluminium trempé comprenant de l'aluminium en une quantité de 95 à moins de 99% en poids, et au moins l'un parmi le cobalt, le cuivre, le lithium, le magnésium, le manganèse, le nickel, le platine et le silicium en une quantité totale d'au moins 0,5% en poids ; et
une couche de poly(aryléthercétone), où au moins une partie de ladite couche d'aluminium trempé et une partie de la couche de poly(aryléthercétone) sont en contact direct.

2. Stratifié de la revendication 1, dans lequel :
(a). la couche d'aluminium trempé comprend de l'aluminium en une quantité d'au moins 98% en poids, et du silicium et du fer en une quantité totale d'au moins 0,5% en poids ; et/ou
(b). l'aluminium est trempé afin d'avoir une catégorie H1.

3. Stratifié de l'une quelconque des revendications 1 et 2, dans lequel l'aluminium est trempé afin d'avoir une catégorie H18.

4. Stratifié de l'une quelconque des revendications 1 et 2, dans lequel l'aluminium comprend
de 98 à 99,49% en poids d'aluminium,
de 0,50 à 1,5% en poids de fer, et
de 0,01 à 0,50% en poids de silicium.

5. Stratifié de la revendication 4, dans lequel l'aluminium comprend
de 98,1 à 99,39% en poids d'aluminium,
de 0,60 à 1,5% en poids de fer, et
de 0,02 à 0,40% en poids de silicium.

6. Stratifié de la revendication 5, dans lequel l'aluminium comprend
de 98,40 à 99,25% en poids d'aluminium,
de 0,70 à 1,3% en poids de fer, et
de 0,05 à 0,30% en poids de silicium.

7. Stratifié de l'une quelconque des revendications 2 à 6, dans lequel l'aluminium comprend en outre d'autres éléments en une quantité totale inférieure ou égale à 0,25% en poids.

8. Stratifié de l'une quelconque des revendications 2 à 6, dans lequel l'aluminium comprend en outre une quantité inférieure ou égale à 0,05% en poids de cuivre, une quantité inférieure ou égale à 0,0003% en poids de magnésium, une quantité inférieure ou égale à 0,05% en poids de titane.

9. Stratifié de la revendication 8, dans lequel l'aluminium est l'Aluminium 8079 trempé avec la catégorie de trempe H18.

10. Stratifié de l'une quelconque des revendications 1 à 9, dans lequel :
(a). le poly(aryléthercétone) est le poly(étheréthercétone) ; et/ou
(b). la couche de poly(aryléthercétone) comprend en outre une charge particulaire en une quantité comprise entre 1 et 80% en poids, par rapport au poids total de la couche de poly(aryléthercétone), où de préférence la charge particulaire est un talc.

11. Stratifié de l'une quelconque des revendications 1 à 10, dans lequel la couche de poly(aryléthercétone) comprend en outre une armature en fibres de verre.

12. Procédé de fabrication d'un stratifié, le procédé comprenant le fait :
de mettre en contact, directement, au moins une partie d'une couche d'aluminium trempé comprenant de l'aluminium en une quantité de 95 à moins de 99% en poids, et au moins l'un parmi le cobalt, le cuivre, le lithium, le magnésium, le manganèse, le nickel, le platine et le silicium en une quantité totale d'au moins 0,5% en poids, avec au moins une partie d'une couche de poly(aryléthercétone) ; et
de lier à chaud la couche d'aluminium et la couche de poly(aryléthercétone) dans des conditions efficaces pour la fabrication du stratifié.

13. Procédé de la revendication 12, dans lequel l'aluminium :
(a). comprend de l'aluminium en une quantité d'au moins 98% en poids, et du silicium et du fer en une quantité totale d'au moins 0,5% en poids ; ou
(b). comprend
de 98,40 à 99,25% en poids d'aluminium,
de 0,70 à 1,3% en poids de fer, et
de 0,05 à 0,30% en poids de silicium, dans lequel de préférence l'aluminium est l'Aluminium 8079 trempé, qui est trempé afin d'avoir une catégorie H18.

14. Procédé de l'une quelconque des revendications 12 et 13, dans lequel la liaison à chaud est réalisée à une température comprise entre 200 et 450°C tout en effectuant une compression sous une pression comprise entre 2 et 10 mégaPascals.

15. Article comprenant le stratifié de l'une quelconque des revendications 1 à 11.
